(19) Europäisches Patentamt
European Patent Office
Office européen des brevets

(11) **EP 3 385 883 A2**

(12) **EUROPEAN PATENT APPLICATION**

(43) Date of publication:
**10.10.2018 Bulletin 2018/41**

(51) Int Cl.:
***G06K 9/00*** *(2006.01)*

(21) Application number: **18166050.7**

(22) Date of filing: **06.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.04.2017 IL 25167017**

(71) Applicant: **Fst21 Ltd.**
**7565435 Rishon Lezion (IL)**

(72) Inventors:
• **Meir-Hasson, Yehudit**
**Mazkeret-Batya (IL)**
• **Bekerman, Roy**
**Ramat-Gan 5245607 (IL)**

(74) Representative: **Grünecker Patent- und**
**Rechtsanwälte**
**PartG mbB**
**Leopoldstraße 4**
**80802 München (DE)**

(54) **SYSTEM AND METHOD FOR UPDATING A REPOSITORY OF IMAGES FOR IDENTIFYING USERS**

(57) A system for dynamically updating a repository of images, wherein a processor is configured to perform repeatedly:

a. obtaining a plurality of images of a candidate user;

b. comparing data representative of at least one of said acquired images with data representative of images of a plurality of users in a repository, and identifying a candidate user as the given user if the comparison meets an identification criterion;

c. comparing data representative of at least one image that has met the identification criterion with data representative of images of the given user in the repository, and updating the data representative of images of the given user stored in the repository with data representative of at least one of the images that has met the identification criterion if the comparison has met an enrollment criterion;

said updated repository constituting a repository for subsequent repetitions of stages (a)-(c).

Fig. 1

**Description**

**FIELD OF THE INVENTION**

The present invention is in the general field of updating a repository of images for identifying users.

**BACKGROUD OF THE INVENTION**

Computerized User Identification systems for identifying users based on their faces or other characteristics are well known in the art and are used in many applications , e.g. admittance control to private areas, for instance admitting the entrance of employees or authorized guests to private company premises. Other examples may be identifying clients who repeatedly approach or enter stores, for offering them coupons, special offers or other commercially related offers.

Typically, in order to identify a candidate user, a repository of images is used and the image of the user (or data related to the user, such as his face) are compared against the repository in order to identify him.

There are numerous known manners for building and updating a repository, see e.g. :
Adaptive ECG biometric recognition: a study on re-enrollment methods for QRS signals.

**Published in:** Computational Intelligence in Biometrics and Identity Management (CIBIM), 2014 IEEE Symposium - The diffusion of wearable and mobile devices for the acquisition and analysis of cardiac signals drastically increased the possible applicative scenarios of biometric systems based on electrocardiography (ECG). Moreover, such devices allow for comfortable and unconstrained acquisitions of ECG signals for relevant time spans of tens of hours, thus making these physiological signals particularly attractive biometric traits for continuous authentication applications. In this context, recent studies showed that the QRS complex is the most stable component of the ECG signal, but the accuracy of the authentication degrades over time, due to significant variations in the patterns for each individual. Adaptive techniques for automatic template update can therefore become enabling technologies for continuous authentication systems based on ECG characteristics.

**1.** Medical biometrics: The perils of ignoring time dependency

**Published in:** Biometrics: Theory, Applications, and Systems, 2009. BTAS '09. IEEE 3rd International Conference - The electrocardiogram (ECG) is a medical signal that has lately drawn interest from the biometrics community, and has been shown to have significantly discriminative characteristics in a population. This paper brings to light the particular challenges of electrocardiogram recognition to advocate that time dependency is a controversial point. In contrast to traditional biometrics, ECG allows for continuous authentication and consequently expands the range of applications. However, time varying biometrics put on the line the recognition accuracy due to increased intra subject variability. This paper suggests a novel framework for bypassing this inadequacy. A template update methodology is proposed and demonstrated to boost the recognition performance over 2 hour recordings of 10 subjects.

**2.** Overview of the Face Recognition Grand Challenge

**Published in**: Proceedings of the 2005 IEEE Computer Society Conference on Computer Vision and Pattern Recognition (CVPR'05)- Over the last couple of years, face recognition researchers have been developing new techniques. These developments are being fueled by advances in computer vision techniques, computer design, sensor design, and interest in fielding face recognition systems. Such advances hold the promise of reducing the error rate in face recognition systems by an order of magnitude over Face Recognition Vendor Test (FRVT) 2002 results. The Face Recognition Grand Challenge (FRGC) is designed to achieve this performance goal by presenting to researchers a six-experiment challenge problem along with a data corpus of 50,000 images. The data consists of 3D scans and high resolution still imagery taken under controlled and uncontrolled conditions. This paper describes the challenge problem, data corpus, and presents baseline performance and preliminary results on natural statistics of facial imagery.

Reference to the specified publications does not imply that they serve as a prior art of the claimed invention.

There is a need in the art to provide for new technique for building and updating a repository of images for the purpose of identifying candidate users.

**SUMMARY OF THE INVENTION**

In accordance with an aspect of the presently disclosed subject matter, there is provided a system for dynamically updating a repository that includes a plurality of images of users comprising:

a set that includes at least one camera operatively associated with a processor
a repository of data representative of images of a plurality of users that includes a given user;
the processor being configured to perform repeatedly, including:

a) obtain a plurality of images of a candidate user acquired by at least one camera of the set;
b) comparing data representative of at least one of the acquired images with data representative of images of the plurality of users in the repository, and identifying the candidate user as the given user if the comparison meets an identification criterion;

c) comparing data representative of at least one image that has met the identification criterion with data representative of images of the given user in the repository, and updating the data representative of images of the given user stored in the repository with data representative of at least one of the images that has met the identification criterion if the comparison has met an enrollment criterion;

the updated repository constituting a repository for subsequent repetitions of stages (a)-(c).

In accordance with an embodiment of the presently disclosed subject matter, there is further provided a system, wherein for a plurality of repetitions: the data representative of at least one image that has met the identification criterion are based on images that were acquired by at least one camera in the set during the current repetition and the data representative of images of the given user in the repository are based on images acquired by a camera of the same set during at least one previous repetition.

In accordance with an embodiment of the presently disclosed subject matter, there is yet further provided a system, wherein for a plurality of repetitions: the data representative of at least one image that has met the identification criterion are based on images that were acquired by a given camera in the set during the current repetition and the data representative of images of the given user in the repository are based on images acquired by the same camera of the set during at least one previous repetition.

In accordance with an embodiment of the presently disclosed subject matter, there is yet further provided a system, wherein the processing unit is configured to:

- extract, from each of the at least part of the data representative of a plurality of images, data representative of an image comprising the face of the given user and wherein the data representative of the images include data representative of the face.

In accordance with an embodiment of the presently disclosed subject matter, there is yet further provided a system wherein the identification criterion includes applying Convolutional Neural Network technique.

In accordance with an embodiment of the presently disclosed subject matter, there is yet further provided a system, wherein the meeting of the identification criterion includes meeting a first matching criterion and wherein the processor unit is configured to:
for at least one of the acquired images: comparing data representative of the acquired image with data representative of images of the given user in the repository and determining whether the first matching criterion is met based on the comparison.

In accordance with an embodiment of the presently disclosed subject matter, there is yet further provided a system, wherein the meeting of the identification criterion includes not meeting a first matching criterion but meeting a similarity criterion, and wherein the processor unit is configured to:
for a first image of the acquired images which did not meet the first matching criterion, comparing data representative of the first image with data representative of a second image of the acquired images which met the first matching criterion and determining whether that similarity criterion is met between the first and second image based on the comparison.
In accordance with an embodiment of the presently disclosed subject matter, there is yet further provided a system for dynamically updating a repository that includes a plurality of images of users comprising:

a set that includes at least one camera operatively associated with a processor
a repository of data representative of images of a plurality of users that includes a given user;
the processor being configured to perform repeatedly, including:

a) obtain a plurality of images of a candidate user acquired by at least one camera of the set;
b) comparing data representative of at least one of the acquired images with data representative of images of the plurality of users in the repository, and identifying the candidate user as the given user if the comparison meets an identification criterion;
c) comparing data representative of at least one image that has met the identification criterion with data representative of images of the given user in the repository, and updating the data representative of images of the given user stored in the repository with data representative of at least one of the images that has met the identification criterion if the comparison has met an enrollment criterion;

the updated repository constituting a repository for subsequent repetitions of stages (a)-(c), wherein the enrollment criterion includes a simulation criterion, and wherein the processor unit is configured to:

for at least one of the acquired images that has met the identification criterion:

comparing data representative of the acquired image with data representative of images of the given user in the repository for determining data representative of the True Accepts (TA) of the acquired image from among the images of the given user in the repository; and
comparing data representative of the acquired image with data representative of images of other users in the repository for determining data representative of the False Accepts (FA) of the acquired image from among images of the other users in the repository,

and determining whether the simulation criterion is met based on the data representative of True Accepts and data representative of False Accepts.

In accordance with an embodiment of the presently disclosed subject matter, there is yet further provided a system, wherein data representative of the FAs consists of:

$$N_{(x)} = \Sigma[FA_{(x)}]/ES_{(x)}$$

where:

N- Sensitivity
FA - False Accept
ES -all images of users other than the given user in the repository;

and data representative of the TAs consists of:

$$P_{(x)} = \Sigma[FR_{(x)}]/V_{(x)}$$

where

P - Sensitivity
FR - False Reject
V - all images of the given user in the repository

and the determination of meeting the simulation criterion is based on a certain ratio between N(x) and P(x).

In accordance with an embodiment of the presently disclosed subject matter, there is yet further provided a system, wherein the processor is further configured to compare data representative of the acquired image with data representative of images of the given user in the repository, and determining, based on the comparison, if a similarity criterion is met with respect to at least one of the images in the repository; determining whether the simulation criterion is met if, in addition, the image does not meet the similarity criterion with respect to any of the images of the given user in the repository.

In accordance with an embodiment of the presently disclosed subject matter, there is yet further provided a system, wherein the enrollment criterion further includes a test period criterion, and wherein said processor unit is configured to:

a) for at least one image that met the simulation criterion:
b) compare data representative of the tested image with data representative of a plurality of new images acquired over a test period, for determining whether data is representative of test period True Accepts (TAs) of the new images by using the tested image; the new images met the identification criterion of the given user;
c) comparing data representative of the tested image with data representative of a plurality of newly acquired images acquired over the test period, for determining a data representative of test period False Accepts (FAs) of the new images by using the tested image; wherein the new images met the identification criterion of at least one other user;
and determining whether the test period criterion is met based on the data representative of the TAs and the FAs.

In accordance with an embodiment of the presently disclosed subject matter, there is yet further provided a system, further including a repository criterion, and wherein the processor unit is configured to:
for each of at least one image that was added to the repository:
compare data representative of the tested image with data representative of a plurality of new images acquired over a test period, for determining repository retention criterion, which, if not met, leads to removal from the repository of the added image.
In accordance with an aspect of the presently disclosed subject matter, there is yet further provided a method for dynamically updating a repository that includes a plurality of images of users comprising:

providing a set that includes at least one camera operatively associated with the a processor;
providing a repository of data representative of images of a plurality of users that includes a given user;
the method including, by the processor:

a) obtaining a plurality of images of a candidate user acquired by at least one camera of the set;
b) comparing data representative of at least one of theacquired images with data representative of images of the plurality of users in the repository, and identifying the candidate user as the given user if the comparison meets an identification criterion;
c) comparing data representative of at least one image that has met the identification criterion with data representative of images of the given user in the repository, and updating the data representative of images of the given user stored in the repository with data representative of at least one of the images that has met the identification criterion if the comparison met an enrollment criterion;

the updated repository constituting a repository for subsequent repetitions of stages (a)-(c).

In accordance with an aspect of the presently disclosed subject matter, there is yet further provided a method for dynamically updating a repository that includes a plurality of images of users comprising:

providing a set that includes at least one camera operatively associated with a processor;
providing a repository of data representative of images of a plurality of users that includes a given user;
the method including, by the processor:

a) obtaining a plurality of images of a candidate user acquired by at least one camera of the set;
b) comparing data representative of at least one of the acquired images with data representative of images of the plurality of users in the repository, and identifying said candidate user as the given user if the comparison meets an identification criterion;
c) comparing data representative of at least one image that has met the identification criterion with data representative of images of the given user in the repository, and updating the data representative of images of the given user stored in the repository with data representative of at least one of the images that has met the identification criterion if the comparison met an enrollment criterion;

said updated repository constituting a repository for subsequent repetitions of stages (a)-(c);

wherein said enrollment criterion includes a simulation criterion, and further comprising:
for at least one of said acquired images that has met the identification criterion:

d) comparing data representative of the acquired image with data representative of images of the given user in the repository for determining data representative of the True Accepts (TA) of the acquired image from among the images of the given user in the repository; and
e) comparing data representative of the acquired image with data representative of images of other users in the repository for determining data representative of the False Accepts (FA) of the acquired image from among images of the other users in the repository,
f) and determining whether the simulation criterion is met based on the data representative of True Accepts and data representative of False Accepts.

In accordance with an embodiment of the presently disclosed subject matter, there is yet further provided a machine-readable memory tangibly embodying a program of instructions executable by a processor.

## BRIEF DESCRIPTION OF THE DRAWINGS

In order to understand the invention and to see how it can be carried out in practice, embodiments will be described, by way of non-limiting examples, with reference to the accompanying drawings, in which:

Fig 1. illustrates schematically premises that include cameras and an associated system for updating a repository of images for identifying users;
Fig. 2 is a general system architecture configured to update a repository of images for identifying users, in accordance with certain embodiments of the invention;
Fig. 3 illustrates schematically a repository of images, in accordance with certain embodiments of the invention;
Fig. 4 illustrates a functional block diagram of the system of Fig. 1, in accordance with certain embodiments of the invention;
Fig. 5 illustrates, schematically, a data flow of a candidate image that meets various stages of an enrollment criterion, and consequently updated in the data repository of images of a given user, in accordance with certain embodiments of the invention;
Fig. 6 illustrates a flow diagram of a sequence of operations of dynamically updating a repository that includes a plurality of images of users, in accordance with certain embodiments of the invention;
Figs. 7A-B illustrate schematically candidate pictures that are subject to the identification criterion and enrolment criterion, in accordance with certain embodiments of the invention;
Fig. 8 illustrates a flow diagram of a sequence of operations of dynamically removing images from a repository that includes a plurality of images of users, in accordance with certain embodiments of the invention; and
Fig. 9 is an exemplary graph that illustrates an update rate over time of a repository of images of a given user.

## DESCRIPTION OF SPECIFIC EMBODIMENTS:

In the following detailed description, numerous specific details are set forth in order to provide a thorough understanding of the invention. However, it will be understood by those skilled in the art that the presently disclosed subject matter may be practiced without these specific details. In other instances, well-known methods have not been described in detail so as not to obscure the presently disclosed subject matter.
Unless specifically stated otherwise, as apparent from the following discussions, it is appreciated that throughout the specification discussions utilizing terms such as "obtaining", "comparing", "identifying", "extracting", or the like, refer to the action(s) and/or process(es) of a processing unit that manipulates and/or transforms data into other data, said data represented as physical, such as electronic, quantities and/or said data representing the physical objects.

The term "processing unit" covers any computing unit or electronic unit with data processing circuitry that may perform tasks based on instructions stored in a memory, such as a computer, a server, a chip, a processor, *etc.* It encompasses a single processor or multiple processors, which may be located in the same geographical zone or may, at least partially, be located in different zones and may be able to communicate together.

The term "non-transitory memory" as used herein should be expansively construed to cover any volatile or non-volatile computer memory suitable to the presently disclosed subject matter.

Embodiments of the presently disclosed subject matter are not described with reference to any particular programming language. It will be appreciated that a variety of programming languages may be used to implement the teachings of the presently disclosed subject matter as described herein.

The invention contemplates a computer program being readable by a computer for executing one or more methods of the invention. The invention further contemplates a processor-readable memory tangibly embodying a program of instructions executable by the processor for executing one or more methods of the invention.

Before moving on. it should be noted that whenever reference is made to comparison of an image to another image (or the like), this may also apply to data representative of the images. Data representative of an image may be obtained for instance by applying certain processing on the image(s) such as preliminary filtering of various types and/or focusing on a certain portion of the image such as the image portion that represents the face of the user, biometric features extracted and communicated as data (distance between eyes, bone structure, nose, etc.)and/or others.

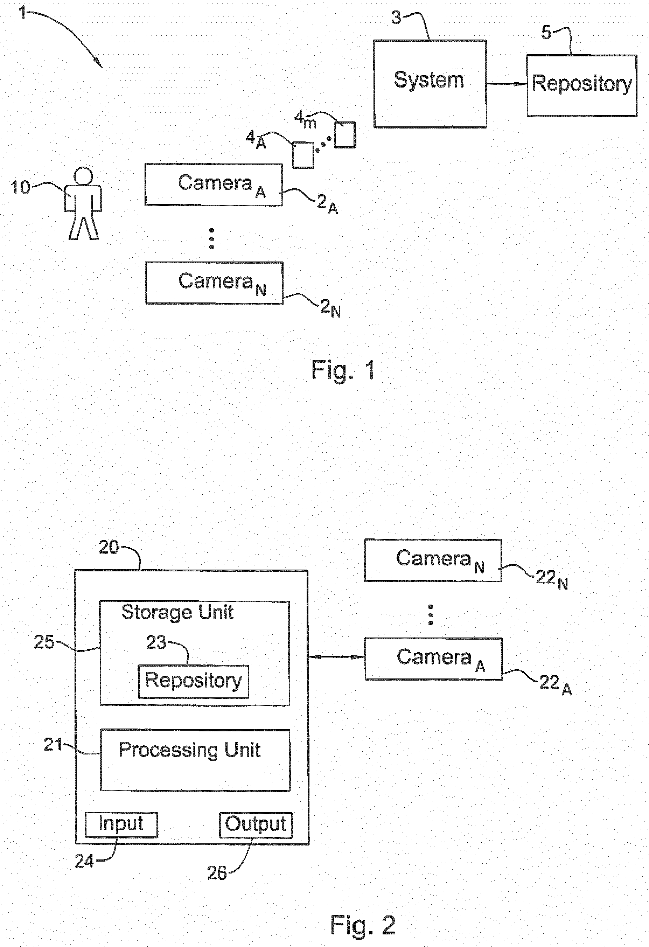

Attention is first drawn to Fig. 1, illustrating schematically premises 1 that include cameras $2_A$ - $2_N$ (of which only two are shown) fitted at (or associated with) a check point or check points. The cameras are coupled to a user identification system 3 and a system for updating a repository of images for identifying users based on one or more images of a candidate user that are acquired by the camera(s). In the schematic sketch of Fig. 1, a user **10** approaches an entrance point where camera **2A** acquires his series of images $4_A$ - $4_M$. The images are transmitted to system 3 for determining whether one or more of the acquired images $4_A$-$4_M$ meet(s) an enrolment criterion (assuming that the user **10** has been identified as a given user) and if yes, the record in the repository **5** that includes an images of the given user $5_A$ is updated.

Note that while the term camera is used in the description it likewise applies to any known *per se* image acquisition device.

Typical, yet not exclusive, exemplary applications for identifying the user and updating the repository, are access to restricted areas, customer identification, tracking faces in the wild, black-list identification, border control, etc.

Turning now to Fig. 2, it illustrates a general system architecture configured to update a repository of images for identifying users, in accordance with certain embodiments of the invention. Thus, system **20** (referred to also as **3** in Fig. 1) includes a processor (referred to interchangeably as processing unit) **21** that is operably coupled to cameras $22_A$-$22_N$ and is configured to perform the various computational steps for updating the repository **23** with images for the purpose of identifying users (and possibly other applications) that form part of storage **25**. Note that the storage can comprise at least a non-transitory memory.

Input data may be fed through input device **24** e.g. keyboard, mouse and/or remotely through a known *per se* communication device, and outputs are provided e.g. through an output device **26** such as a display and/or remotely through a known *per se* communication device, all as will be explained in greater detail below.

Although the elements which are part of the system are depicted in **Fig. 2** as being located in the same system, it is to be understood that, according to some embodiments, these elements can be at least partially located in different zones or in different systems and can communicate together.

The processing unit **21** is operatively associated with a camera(s) **2.** "Operatively associated" means that there may be provided a communication link over which data or commands can be communicated between the coupled units (e.g. in at least one direction), for example in the form of messages or data streams. The communication link can for example be continuously activated or be activated on request.

Although the camera(s) **22** are depicted in **Fig. 2** as being external to the system, it is to be understood that, according to some embodiments, the camera **22,** or at least some of a plurality of the cameras, can be part of the system.

The input/output device may include a communication unit which can for example comprise an antenna, or any adapted device which can receive data (and if necessary also send data) through a wireless communication network. Examples of wireless communication networks can include: Bluetooth, Bluetooth Low Energy, Wi-Fi, or a cellular communication network such as 3G or 4G. These examples are however not limitative.

If necessary, the input device can include an interface (not depicted) which can allow a user to interact with the system **1,** for example to enter data or change settings (such as a screen associated with a keyboard, or a virtual interface which can be accessed by e.g. a phone of the user).

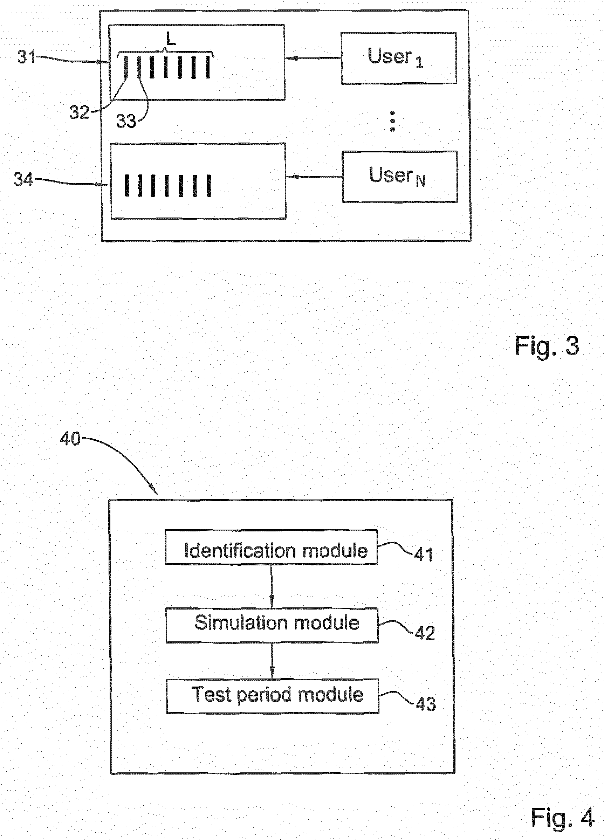

Turning now to FIG. 3, it illustrates schematically a repository of images, in accordance with certain embodiments of the invention. The repository 5 stores images, for identifying users based on one or more images of a candidate user that are acquired by the camera(s).

The repository may store records of data each including a series of images of a given user. In the example of Fig. 3, there are N users (of which there are shown only two records 31 and 34 in respect of users 1 and N respectively). Each record may store a plurality of images (say L images e.g. 32 and 33) that serve for identifying the user, all as will be explained in greater detail below. Note that the invention is not bound by any specific data structure for storing the images of the users. Note also that the term "record" for storing images of a given user is provided for illustrative purposes only and any known *per se* data structure may be used for storing images (or data representation of the images) of the users in the repository. Note also that although the repository is shown as part of the storage of system 3, it may reside wholly or partially in the same geographical location and or partly or wholly at a remote location or locations remotely communicating with the system (if necessary in a secured fashion), all depending upon the particular application.

Turning now to Fig. 4, it illustrates a functional block diagram of the system **40** of Fig. 1, in accordance with certain embodiments of the invention. As will be explained in greater detail below, various modules may be implemented on processor 22, for determining whether the enrollment criterion has been met for updating repository **23.** Thus, a series of acquired images are fed to the processor (and possibly stored on the storage **25)** and processed in the identification module **41** (which, in turn, utilizes repository **23** that may form part of storage **25)** in order to determine whether one or more of them corresponds to a given user, thus identifying him or her at the specified check point. The latter exemplifies a stage of comparison between the acquired image (by the camera) and images stored in the repository in order to determine if the identification criterion has been met. In order to identify the user, various known *per se* techniques may be utilized e.g. CNN for face identification (Convolutional Neural Network). Note that the invention is not bound by the specified techniques for identifying users. Note also that the specified techniques may refer to body parts such as face recognition and/or other user characteristics such as behavioral analysis, using for example the specified CNN technique. (Note also, that the identification may include matching analysis to determine whether the acquired image matches (e.g. to a degree that exceeds a given threshold for one or more of the images of the given user in the repository). It is thus evident that the identification criterion may be complex and composed of a few conditions. The identification stage will be described in greater detail below. This extension applies *mutatis mutandis* to other criteria used herein, such as the enrolment criterion, simulation criterion and test period criterion.

After having identified the given user in one or more of the acquired images, each image that has met the identification criterion is fed to a simulation module 42 for determining whether it has met a simulation criterion which, according to certain embodiments. forms part of the enrolment criterion. Intuitively, the simulation module runs a "simulation" in order to ascertain that the image (identifying the given user) is "similar" to images of the given user in the repository and at the same time is "not similar" to images of other users in the repository. The simulation stage will be described in greater detail below. Note that the terms "fidelity simulator" or "fidelity simulation" or "fidelity simulation module" are used in short herein as " simulator" or "simulation" or "simulation module".

The images which have met also the simulation module may be included in the repository for a test period and may be subjected to processing in the test period module 43 for determining whether they meet a test period criterion, which, in certain embodiments, forms part of the enrolment criterion. In accordance with certain embodiments, if the test period criterion has been met, the tested image has met the enrolment criterion, and the repository may be updated with the specified image. Intuitively, the test period criterion is aimed to test if An=N image that is "temporarily" included in a record of the given user in the repository, "succeeds" to identify, over a period of time, newly acquired images of the given user (e.g. successive arrivals of the given user to the check point) and does not "wrongly" identify a user or users other than the given user based on the newly acquired images. A period of time may be defined as extending over a given time duration, number of newly acquired images, and so forth. The test period stage will be described in greater detail below.

Note that in accordance with certain embodiments where the repository is limited in the number of images, an image that has met the enrolment criterion (a first image) and is added to the record of the given user in the repository, may be removed therefrom, if, for example, another image is acquired at a later stage (a second image) which meets the enrolment criterion and outperforms the first image, all as will be described in detail below.

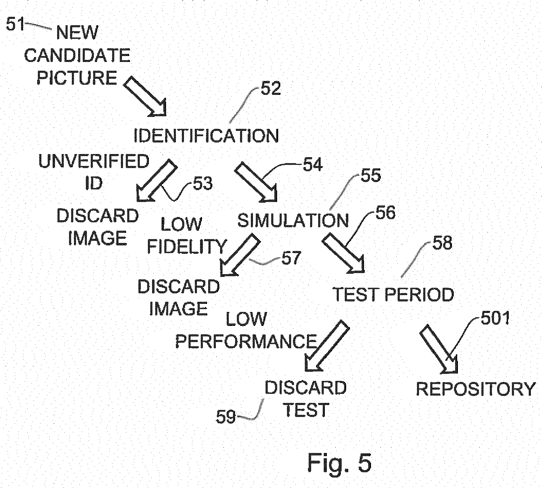

Turning now to Fig. 5, it illustrates, schematically, a data flow of an image that has met various stages of an enrollment criterion, and has been consequently added to the record of the given user in the data repository, in accordance with certain embodiments of the invention. As shown, an acquired image **51** of a candidate user, may undergo processing **52** in processor **21** for determining whether it meets an identification criterion of a given user (e.g. in identification module **41**). Should it not meet the specified criterion, it may be discarded **53.** Should it meet the specified criterion **54,** it may be processed **55** (e.g. in simulation module **42**) to determine whether it meets the simulation criterion. Should it not meet the specified criterion, it may be discarded **57.** If it meets the simulation criterion **56,** it may undergo processing **58** in processor **21** for determining whether it meets a test period criterion (e.g. in time period module **43**). Should it not meet the specified criterion, it may be discarded **59,** otherwise it meets the enrolment criterion **501** and the appropriate record of the given user in the repository **23** may be updated.

The invention is not bound by the specified data flow for determining whether an image has or has not met the enrolment criterion.

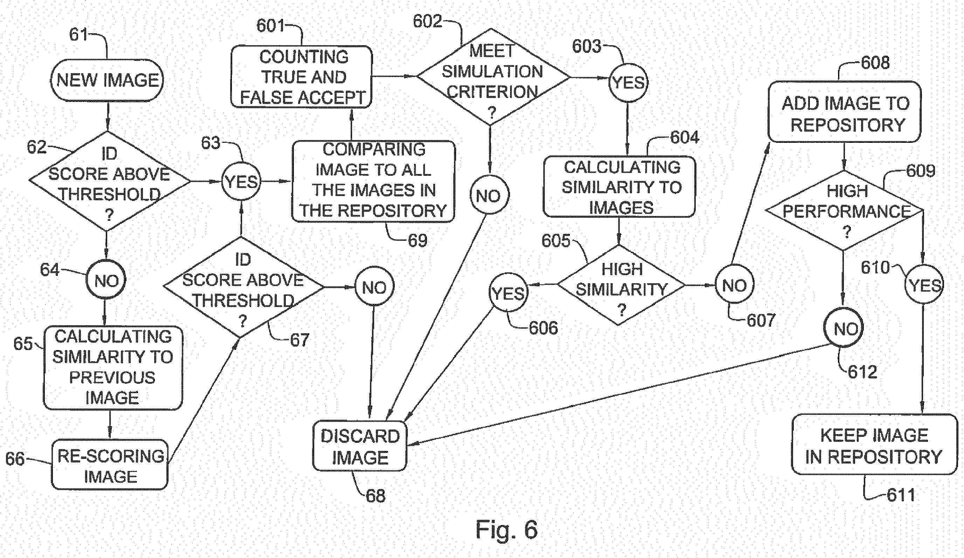

For a better understanding of the foregoing, attention is directed to Fig. 6, illustrating a flow diagram of a sequence of operations of dynamically updating a repository that includes a plurality of images of users, in accordance with certain embodiments.

The sequence of operations may be performed on processor **21.** Thus, at the onset, a new image **61** of a candidate user is acquired (e.g. by one of the cameras **22**) for the purpose of identifying the given user as described above. To this end, data representation of the candidate image is compared to data representation of images of the plurality of users in the repository, and identifying said candidate user as the given user if the comparison meets an identification criterion. For instance, a known *per se* matching technique (e.g. as specified above) may be applied, and in case that the matching score (compared to data representative of images in a record of a given user in the repository) exceeds a given threshold (**62, 63**) then the identification criterion is met. As specified above, the matching may refer to body parts (such as the face), user characteristics, such as user behavior etc., and may require pre-processing (not shown in Fig. 6) such as extracting the face section in the acquired image, all as known *per se.* The processing may require analysis of a series of acquired images (in addition to image **61**) e.g. for determining certain behavioral characteristics of the candidate user.

Reverting now to inquiry **62,** in case said score drops below the required threshold 64 the identification criterion may nevertheless be met. Thus, the candidate image (that did not meet the matching criterion) is compared to data representative of images other than **61** which met the first matching criterion (e.g. their score exceeded the threshold in inquiry **62**) in order to determine whether the tested image (**61**) is sufficiently similar (using known *per se* similarity testing techniques , such as T-test, Chi$^2$, etc.) to any of the other images. More specifically, based on the similarity extent **65,** the matching score is adjusted **66** and now the matching score is tested against the threshold **67** (in a similar fashion to inquiry **62**) and in case it exceeds the threshold (**53**) the identification criterion is met, otherwise the tested image **51** may be discarded (**58**) for the purpose of updating the repository.

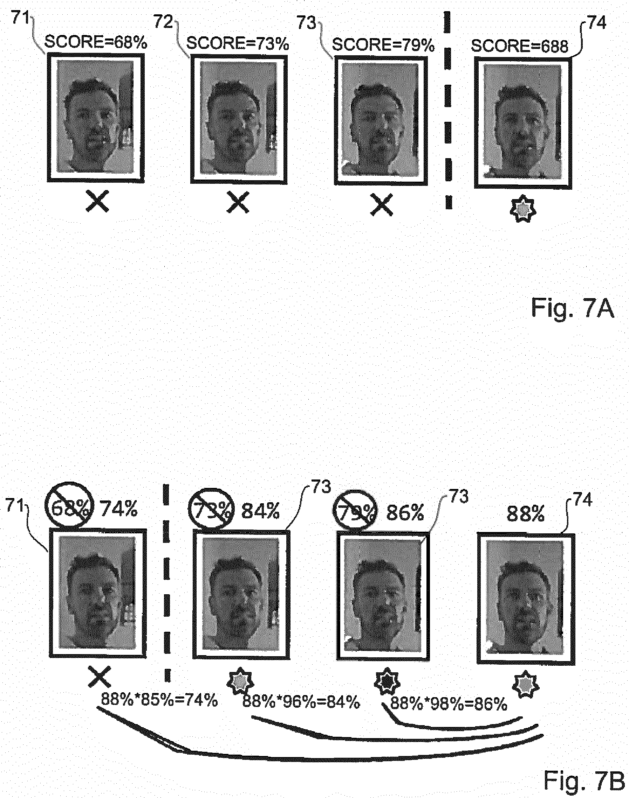

For a better understanding of the foregoing, attention is now drawn also to Figs. 7A-B illustrating schematically candidate pictures that are subject to the identification criterion and enrolment criterion, in accordance with certain embodiments of the invention. Thus, consider, for example, acquired images **71 - 74** (of Fig. 7A) of which image **74** (having matching score 88%) has met the identification criterion which requires that the matching score (by applying matching algorithm between the respective candidate image and image(s) in the repository all as discussed above) meets (e.g. exceeds) a threshold, say 80%. Had the similarity criterion not been applied, only image **74** would have proceeded for further processing, whereas the others (**71-73**) would have been discarded, because their respective scores (79%, 73% and 68%) drop below the threshold . In accordance with certain embodiments, step **65** is implemented by applying a similarity criterion between the image that has met the identification criterion (**74**) and any of the other images (**71 - 73**) that have not met the identification criterion (e.g. by this example, their matching score dropped below 80%). As shown in Fig. 7B, by a non-limiting example, a known *per se* similarity technique is applied between images **74** and **73,** giving rise to a 98% similarity score, and, by the same token, the similarity test between image **74** vs. **72,** and **74** vs. **71,** results in similarity scores of 96% and 85% respectively. The adjusted score for the other images (i.e. **71-73**) would be the original score of the image that met the test (by this example 88% for image **74**) multiplied by the similarity score (98%, 96% and 85%) for the other images (**73, 72** and 71 respectively) giving rise to adjusted scores 86%, 84% and 74%.

The net effect is thus that images **72** and **73** that have not originally met the identification criterion, have (due to the similarity test) met the identification criterion and they proceed to subsequent processing, whereas image **71** is discarded.

Obviously, the invention is neither bound by the specified technique for meeting the similarity criterion, nor by the numerical values which are provided for illustrative purposes only. Thus, by way of non-limiting example, the similarity score may take into account (in a certain weight) the original identification score of the image, and not only the score of the "passing image" (in the latter example 74) and the similarity score between the "passing image" and each one of the other images. Obviously various known *per se* techniques may be applied for calculating the similarity score. Other variants may be applicable, all as depending upon the particular application.

Reverting again to Fig. 6, the underlying rationale for further testing the similarity extent to other images, is that if an acquired image *a* has not met the matching score (64) but it is sufficiently similar to an acquired image b (or images) which has met the matching score 65 (namely the latter image b can "identify" *a* as a given user), then due to the similarity between image *a* and image *b*, the former can also serve for identifying the given user, and therefore it meets the identification criterion (although it failed the matching test **62**).

Bearing this in mind, and assuming that the tested image **61** has met the identification criterion (namely, it identifies the candidate user as a given user in the repository), then in accordance with certain embodiments, the image is tested in order to determine whether it meets an enrolment criterion, which, in accordance with certain embodiments, includes checking if it meets the simulation criterion. Thus, in step **69,** image **61** (which has already been identified as the given user) is compared to other images in the record of the given user in the repository in order to determine representatives of (e.g. the number of) True Accepts (TA), namely the number of images of the given user in the repository that "matched" image **61.** The matching is determined using, say, a specified CNN technique. Consider, for example, that the record of the given user includes 25 images and that the number of TAs is X (out of the 25). Intuitively, the higher the number of TAs (**601**) the more likely that the tested image can be used in the repository for identifying future arrivals of the given user to the check point. Then, image **61** (which has already been identified as the given user) is compared to images of users other than the given user, in order to determine the number of False Accepts (FA), namely the number of images of other users in the repository that "matched" image **61** (of the given user). Intuitively, the lower the number of FAs **601** the more likely that the tested image can be used in the repository (because it does not identify "wrong users"). The simulation criterion is met based on the True Accepts and False Accept (**602, 603**).

In accordance with certain embodiments, for meeting the simulation criterion, the number of TAs should be high, and the number of FAs should be low, where "low" and "high" may be determined in accordance with the required level of confidence of identifying the given user.

In accordance with other embodiments, Sensitivity value N(x) may be calculated in accordance with the following equation:

$$N_{(x)} = \Sigma[FA_{(x)}]/ES_{(x)}$$

Where:

    N- Sensitivity
    FA - False Accept
    ES -all images of users other than the given user in the repository

The Specificity value P(x) may be calculated in accordance with the following equation:

$$P_{(x)} = \Sigma[FR_{(x)}]/V_{(x)}$$

Where

    P - Sensitivity
    FR - False Reject
    V - all images of the given user in the repository

Determination of meeting the simulation criterion may be based on a certain ratio between N(x) and P(x), where the ratio may be determined in accordance with the required level of confidence of identifying the given user.

In accordance with certain embodiments, instead of calculated TA (in the specified sensitivity value) the complementary value of FR (False Reject - FR) is calculated, where the number of FR = V - the number of TAs. Intuitively, the lower the number of FR, the more likely that the tested image can be used in the repository.

In accordance with certain embodiments, not all the images of the given user in the repository are used.

In accordance with certain embodiments not all the images of the other users are used.

The various examples described above are non-limiting examples of determining whether the simulation criterion is met.

In case that the simulation criterion has not been met, the image is discarded **68** (for the purpose of updating the repository). Otherwise (**603**), in accordance with certain embodiments, said enrolment criterion further includes determining that said simulation criterion is met if, in addition, said image does not meet a similarity criterion with respect to any of images of the given user in the repository. Thus, and as shown in Fig. 6, the tested image is compared using known *per se* similarity techniques to images of the given user in the repository (**604, 605**) and in the case of high similarity, the simulation criterion is not met (**606**) the image is discarded (**68**) for the purpose of updating the repository. The rationale here is that if the tested image is too similar to images that are already included in the repository of the given user, there is no point in enriching the repository with an overly similar image. In certain embodiments, the repository is composed of images which, on the one hand, can serve for identifying the user, but on the other hand are different one from the other, allowing identification of difference appearances of the user (e.g. different check-point angle, different head orientation, different ambient lighting conditions and/or other variants. By this embodiment, in case that the image (**61**) is not overly similar to images of the given user in the repository, **607** it has met the simulation criterion and the repository is updated with the tested image and will serve for identification of the user in his future arrivals to the check point(s).

Note that when the new image (e.g. **61**) is added to the repository, the size of the record representative of the given user is increased, or in accordance with other embodiments, the newly entered image (**61**) substitutes an existing one thereby retaining the record's size, all as will be explained in greater detail below.

Having met the simulation criterion, in accordance with certain embodiments the enrolment criterion includes a test period criterion.

As specified above, intuitively, the test period criterion is aimed to test whether an image that is "temporarily" included in the record of the given user in the repository, can identify, over a period of time, newly acquired images of the given user (e.g. successive arrivals of the given user to the check point) and does not "wrongly" identify a user or users other than the given user, based on the newly acquired images thereof.

Reverting now to Fig. 6, after the image (e.g. **61**) has been added to the repository **608,** its performance is tested over a period of time (**609**). More specifically, in accordance with certain embodiments, data representative of the image **61** (which is already in the repository) is compared with data representative of a plurality of new images of the given user as acquired over a test period (for instance, new acquired images of the given user over $n_1$ future arrivals), for determining data representatives of (i.e. a number of) test period True Accepts (TAs) of said new images by using image **61**. Thus, for instance, from among the $N_1$ future arrivals of the given user (assuming for simplicity $n_1$ new acquired images) how many times (i) image **61** participated in "correctly identifying" the given user (exemplifying True Accepts). Note that the determination of TA may be in accordance with the technique described above (see step **69**). By the same token, data representative of the tested image **61** is compared with data representative of a plurality of new images of other users as acquired over a test period (for instance, new acquired images of the other users over $n_2$ future arrivals), for determining data representatives of (i.e. a number of) test period False Accepts (FA's) of said new images by using image **61.** Thus, for instance, from among the $n_2$ future arrivals of the other user (assuming for simplicity $n_2$ new acquired images) how many times (j) image **61** participated in "wrongly identifying" a user other than the given user (exemplifying j False Accepts). Note that the determination of a FAs may be in accordance with the technique described above (see step **69).**

Then, there follows a step of determining if the test period criterion is met based on the number of TAs and FAs. The description above with reference to the simulation criterion exemplifies various non limiting examples of determining that a criterion is met based on number of TAs and FAs **610.** By this embodiment, in case the latter criterion is met, the enrolment criterion as a whole is met and the tested image is retained in the repository (**611**).

Otherwise, if the test period criterion is not met (**612**), the enrolment criterion has failed, and the tested image is removed from the repository (**68**).

Note that whenever reference is made to "number of" TAs and/or FAs, this is a not limiting example of data representative of TAs and/or FAs. By way of another example, the number of FRs is also embraced by data representative of TAs.

As has been mentioned above, In accordance with certain embodiments of the invention, once an image of a given user meets the enrolment criterion and is added to the repository, a different image of the same user is removed from the repository (that already resides therein)..

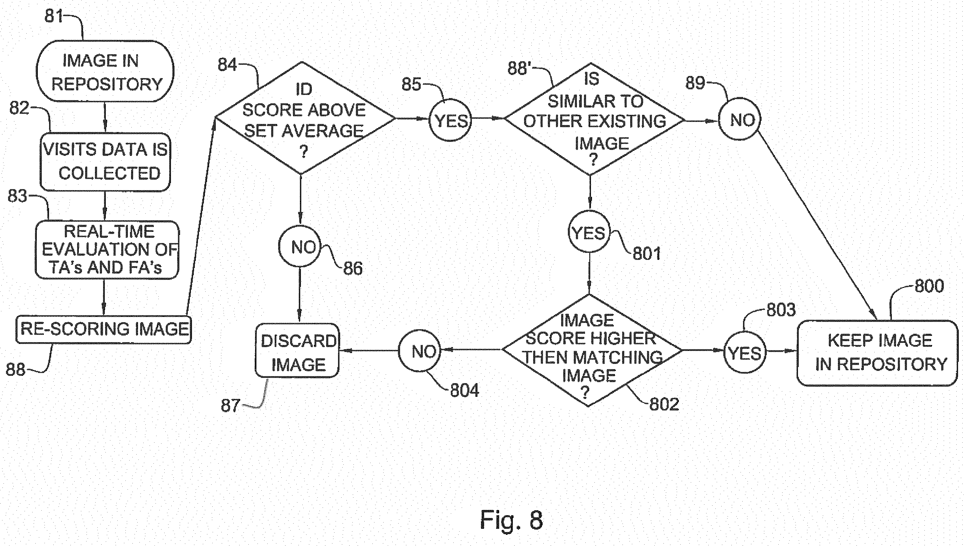

Thus, attention is drawn to Fig. 8 illustrating a flow diagram of a sequence of operations of dynamically removing images from a repository that includes a plurality of images of users, in accordance with certain embodiments of the invention.

Intuitively, images in the repository, which in accordance with certain embodiments of the invention, have met the test period criterion, are periodically or constantly tested vis-à-vis newly acquired images to ascertain if they meet a repository removal (or repository retention) criterion in order to decide whether they can be retained in the repository. The specified criterion may require a certain level of performance (e.g. meeting a certain threshold) and/or in certain embodiments their performance is/are compared to the performance of other images in the repository and in case they perform a degraded score, they may be removed from the repository.

Note that removal maybe applied in cases where the repository is composed of a fixed number of images (namely an image may be removed while another is added) or irrespective of the repository size which may lead to reducing the number of images in the repository. The latter are only non-binding examples.

Thus, and as shown in Fig. 8, after the image (e.g. **81**) has been added to the repository, its performance is tested over a period of time. More specifically, in accordance with certain embodiments, data representative of the image **81** is compared with data representative of a plurality of new images of the given user as acquired over a period (for instance, new acquired images of the given user over $N_1$ future arrivals 82), for determining data representative of (i.e. a number of) test period True Accepts (TAs) of said new images by using image **81.** Thus, for instance, from among the $N_1$ future arrivals of the given user (assuming for simplicity $N_1$ are newly acquired images), how many times (i) image **81** participated in "correctly identifying" the given user (exemplifying True Accepts). Note that the determination of TA may be in accordance with the technique described above. By the same token, data representative of the tested image **81** is compared with data representative of a plurality of new images of other users as acquired over a test period (for instance, newly acquired images of the other users over $N_2$ future arrivals), for determining data representativeof (i.e. a number of) test period False Accepts (FAs) of said new images by using image **81.** Thus, for instance, from among the $N_2$ future arrivals of the other user (assuming for simplicity $N_2$ are newly acquired images), how many times image **81** participated in "wrongly identifying" a user other than the given user (exemplifying False Accepts). Note that the determination of an FA may be in accordance with the technique described above. The real-time determination of the performance (e.g. by calculating data representative of TAs and FAs) is performed in **83** and leads to dynamically updating **88** of the data representative of the FA and TA when calculated in respect of each acquired image **82.** Then, it is determined whether a repository retention criterion is met based on the data representative of True Identifications and data representative of False Identification. Thus, for instance, in inquiry **84** the comparison yields a score that is compared against a desired performance average (e.g. meeting a pre-determined or dynamically changing) threshold. In case the criterion is met **85** (i.e. by this example the score meets the threshold), the image is retained (or is subjected to further evaluation), otherwise **86** it is removed from the repository **87.**

The determination of the data representative of TAs and FAs, as well as determining if a criterion is met based on these data, has been exemplified in detail above.

As may be recalled with reference to steps **604-606** of Fig. 6, the enrolment criterion further includes determining that said simulation criterion is met if, in addition, said image does not meet a similarity criterion with respect to any of images of the given user in the repository.

In accordance with certain embodiments, instead of, or in addition to the above, the repository retention criterion includes a similarity criterion for determining whether an image should be retained in the repository. Thus, for example, instead of testing the similarity criterion in the enrolment stage, all those images which met the other criteria are added to the repository, meaning that there may be a situation where two or more images that met the other criteria (e.g. identification, simulation and test period) will be added to the repository, despite the fact that they are "overly" similar to one or more of the images that already exist in the repository.

Now, reverting to Fig. 8 and more specifically to **85,** those images that passed the real-time retention criterion and, on the face of it, should be retained ,are now tested to evaluate whether they "outperform" over images in the repository which are "similar thereto". From among the similar images, those that manifest degraded performance are removed.

Thus, and as shown in Fig, 8, the tested image is compared using known *per se* similarity techniques to images of the given user in the repository (**88**) and in the case of not meeting the similarity criterion **89** the image is retained in the repository **800,** because it has met the real-time retention criterion and it is not sufficiently similar to any other images in the repository, and therefore it can be retained in the repository. The latter embodiment exemplifies the requirement of not meeting the similarity criterion with other images in order to meet the repository retention criterion.

Conversely, in cases where the similarity criterion is met **801** an outperforming criterion should also be met in order to be retained in the repository. The outperform evaluation for meeting the outperforming criterion, may be performed vis-a-vis other similar images, to compare their performance. Thus, for example, a performance score may be obtained based on the so calculated data indicative of TAs and FAs (**83** and **88** above). Then, respective scores are compared **802** and the image whose score is the higher **803** will be retained in the repository **800** whereas the others (one or more similar images) whose score is lower **804** will be removed from the repository **87.** Thus, in accordance with the latter embodiment, the data retention criterion prescribes also meeting the similarity criterion and meeting also an outperforming criterion among the similar images.

Those versed in the art will readily appreciate that whenever a given criterion is met, it equivalently applies for instance to not meeting the opposite criterion. For instance, meeting the real-time retention criterion may suggest not meeting the real-time removal criterion which, in both cases, means that the image is retained (i.e. not removed) from the repository.

Note that in accordance with certain embodiments the specified real time evaluation as described with reference to Fig. 8 may be performed repeatedly e.g. in a continuous fashion or over one or more periods of time, where the latter may be defined as extending over a given time duration, number of newly acquired images, and so forth.

Note that in the context of various embodiments of the invention, whenever reference is made to" meeting a threshold", it embraces for instance arriving at the threshold, or exceeding the threshold. Moreover, the threshold may be static or dynamic, it may be a value or range of values, it may include more than one threshold that may be met, and so forth.

There follows a discussion that pertains to advantages of utilizing the proposed technique in accordance with certain embodiments of the invention. Thus, for example, successive executions of the sequence of operations as described e.g. with reference to Fig. 6 and optionally 8, results in dynamic update of the repository of a given user with images that have met the enrolment criterion, and, whenever applicable, removal of images that reflect degraded performance in identifying the given user. An exemplary graph illustrating dynamic update of the repository is illustrated in Fig. 6.

In accordance with certain embodiments, over time, less updates are likely to occur, because the repository consists of images that duly identify the user (e.g. high TA score and low FA score). The net effect is that the repository is dynamically updated with images that demonstrate high performance (e.g. perform high TA rate score and low FA score).

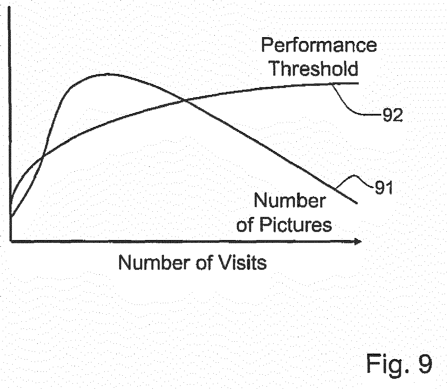

Fig. 9 shows an exemplary graph that illustrates an update rate over time of a repository of images of a given user. Thus, in accordance with certain embodiments, over time, less images are retained in the repository (as shown by graph **91**) and only those that meet the real-time retention criterion (e.g. meet the ever increasing performance score **92**) will be retained in the repository. Thus, over time, the repository will consist of only images that outperform in duly identifying the given user and not "wrongly" identifying other users, all as discussed above, manifesting thus an advantage in accordance with certain embodiments of the invention.

Considering the fact that, on regular basis, images that have been acquired are evaluated according to the enrolment criterion to decide whether to add them to the record of the given user in the repository, the latter duly reflects the current appearance of the user (high level of similarity between recently acquired images and images in the repository) thereby inherently coping with aging and other factors that may result in change of appearance of the user over time, and thus hinder identification of the users according to hitherto known solutions. This advantage stems from, among others, the fact that images that have been acquired by the camera for the purpose of user identification, will be added to the repository (in case they meet the enrolment criterion) and will serve for identifying future arrivals of the user (based on newly acquired images thereof).

Note that in accordance with certain embodiments, for each of a plurality of repetitions, the data representative of at least one image that has met the identification criterion, are based on images that were acquired by at least one camera in the set during the current repetition and the data representative of images of the given user in the repository are based on images acquired by a camera of the same set during at least one previous repetition. Thus, for example, in accordance with the latter, an image that has just been obtained by a camera out of the set of cameras (say the specified $22_A$-$22_N$) has met the identification criterion of the given user. If this image has met the enrolment criterion, it is based on images (data representative of images) in the repository that were also acquired (earlier than the current image) by a camera of the same set (namely camera of $22_A$-$22_N$). More specifically, it may be the same camera in the set, e.g. camera $22_A$. This provides a clear advantage, in that the repository has a high prospect of duly identifying the given user in future visits based on newly acquired images thereof that were acquired by any (or specific) camera in the set.

In accordance with certain embodiments, the utilization of cameras in the set operating in given (or very similar) conditions (e.g. light conditions, precise location, angle of view of the camera, and so forth) for identifying the given user and, if meeting the enrolment criterion, also for updating the repository (for identification of the given user in future visits) constitute an advantage that results in high performance in identifying the given user compared to hitherto known techniques.

In accordance with certain embodiments, the repository is dynamically updated over time with images of the given user that have been acquired by the camera (for the purpose of identifying him) thereby maintaining a higher level of similarity between the images of the given user that were recently acquired and a plurality of images of the given user stored in the repository, compared to a lower level of similarity between the images of the given user that were recently acquired and a plurality of images of the given user stored in a hypothetical repository that would have been obtained, had the hypothetical repository been dynamically updated with images of the given user other than those acquired by any of the cameras.

According to some embodiments, the proposed solution provides an efficient way to update a repository of images.

According to some embodiments, the proposed solution improves the quality and the reliability of t identification of users by using an improved repository according to various embodiments of the invention.

According to some embodiments, the proposed solution can reduce time for identifying users by using an improved repository according to various embodiments of the invention.

According to some embodiments, the proposed solution can propose an identification for many applications, such as identification of users in airports, stores, *etc.,* and for various purposes, such as security of transactions, security in public places, improvement of transactions, improvement of the service provided to users, etc., all using the innovative repository of images in accordance with certain embodiments of the invention. These examples are however not limitative.

It is to be noted that the various features described in the various embodiments may be combined according to all possible technical combinations.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

Those skilled in the art will readily appreciate that various modifications and changes can be applied to the embodiments of the invention as hereinbefore described without departing from its scope, defined in and by the appended claims.

## Claims

1. A system for dynamically updating a repository that includes a plurality of images of users comprising:

   a set that includes at least one camera operatively associated with a processor

a repository of data representative of images of a plurality of users that includes a given user; the processor being configured to perform repeatedly, including:

a. obtain a plurality of images of a candidate user acquired by at least one camera of said set;

b. comparing data representative of at least one of said acquired images with data representative of images of the plurality of users in the repository, and identifying said candidate user as the given user if the comparison meets an identification criterion;

c. comparing data representative of at least one image that has met the identification criterion with data representative of images of the given user in the repository, and updating the data representative of images of the given user stored in the repository with data representative of at least one of the images that has met the identification criterion if the comparison has met an enrollment criterion;

said updated repository constituting a repository for subsequent repetitions of stages (a)-(c).

2. The system of Claim 1, wherein for a plurality of said repetitions: the data representative of at least one image that has met the identification criterion are based on images that were acquired by at least one camera in the set during the current repetition and the data representative of images of the given user in the repository are based on images acquired by a camera of the same set during at least one previous repetition.

3. The system of Claim 2, wherein for a plurality of said repetitions: the data representative of at least one image that has met the identification criterion are based on images that were acquired by a given camera in the set during the current repetition and the data representative of images of the given user in the repository are based on images acquired by the same camera of said set during at least one previous repetition.

4. The system of any one of the preceding Claims, wherein the processing unit is configured to:

- extract, from each of said at least part of the data representative of a plurality of images, data representative of an image comprising the face of the given user and wherein said data representative of the images include data representative of said face.

5. The system of any one of the preceding claims, wherein the identification criterion includes applying Convolutional Neural Network technique.

6. The system of any one of the preceding Claims, wherein the meeting of said identification criterion includes meeting a first matching criterion and wherein said processor unit is configured to:
for at least one of said acquired images: comparing data representative of the acquired image with data representative of images of the given user in the repository and determining whether said first matching criterion is met based on the comparison.

7. The system of any one of claims 1 to 5, wherein the meeting of said identification criterion includes not meeting a first matching criterion but meeting a similarity criterion, and wherein said processor unit is configured to:
for a first image of said acquired images which did not meet the first matching criterion, comparing data representative of the first image with data representative of a second image of said acquired images which met the first matching criterion and determining whether that said similarity criterion is met between said first and second image based on the comparison.

8. A system for dynamically updating a repository that includes a plurality of images of users comprising:

a set that includes at least one camera operatively associated with a processor;
a repository of data representative of images of a plurality of users that includes a given user;
the processor being configured to perform repeatedly, including:

a. obtain a plurality of images of a candidate user acquired by at least one camera of said set;

b) comparing data representative of at least one of said acquired images with data representative of images of the plurality of users in the repository, and identifying said candidate user as the given user if the comparison meets an identification criterion;

c) comparing data representative of at least one image that has met the identification criterion with data representative of images of the given user in the repository, and updating the data representative of images of the given user stored in the repository with data representative of at least one of the images that has met the identification criterion if the comparison has met an enrollment criterion;

said updated repository constituting a repository for subsequent repetitions of stages (a)-(c), wherein said enrollment criterion includes a simulation criterion, and wherein said processor unit is configured to:

for at least one of said acquired images that has met the identification criterion:

comparing data representative of the acquired image with data representative of images of the given user in the repository for determining data representative of the True Accepts (TA) of the acquired image from among the images of the given user in the repository; and

comparing data representative of the acquired image with data representative of images of other users in the repository for determining data representative of the False Accepts (FA) of the acquired image from among images of the other users in the repository,

and determining whether said simulation criterion is met based on the data representative of True Accepts and data representative of False Accepts.

9. The system according to Claim 8, wherein data representative of the FAs consists of:

$$N_{(x)} = \Sigma[FA_{(x)}]/ES_{(x)}$$

where:

N - Sensitivity
FA - False Accept
ES - all images of users other than the given user in the repository;

and data representative of the TAs consists of:

$$P_{(x)} = \Sigma[FR_{(x)}]/V_{(x)}$$

where

P - Sensitivity
FR - False Reject
V - all images of the given user in the repository and the determination of meeting the simulation criterion is based on a certain ratio between N(x) and P(x).

10. The system according to Claims 8 or 9, wherein said processor is further configured to compare data representative of the acquired image with data representative of images of the given user in the repository, and determining, based on the comparison, if a similarity criterion is met with respect to at least one of the images in the repository;
determining whether said simulation criterion is met if, in addition, said image does not meet said similarity criterion with respect to any of said images of the given user in the repository.

11. The system of any one of Claims 8 to 10, wherein said enrollment criterion further includes a test period criterion,
and wherein said processor unit is configured to:

a) for at least one image that met the simulation criterion:
b) compare data representative of said tested image with data representative of a plurality of new images acquired over a test period, for determining whether data is representative of test period True Accepts (TAs) of said new images by using the tested image; said new images met the identification criterion of the given user;
c) comparing data representative of said tested image with data representative of a plurality of newly acquired images acquired over said test period, for determining a data representative of test period False Accepts (FAs) of said new images by using the tested image; wherein said new images met the identification criterion of at least one other user;

and determining whether said test period criterion is met based on the data representative of the TAs and the FAs.

12. The system of any one of Claims 8 to 11, further including a repository criterion,
and wherein said processor unit is configured to:
for each of at least one image that was added to the repository:
compare data representative of said tested image with data representative of a plurality of new images acquired over a test period, for determining repository retention criterion, which, if not met, leads to removal from the repository of the added image.

13. A method for dynamically updating a repository that includes a plurality of images of users comprising:

providing a set that includes at least one camera operatively associated with a processor;
providing a repository of data representative of images of a plurality of users that includes a given user;

the method including, by the processor:

a) obtaining a plurality of images of a candidate user acquired by at least one camera of said set;

b) comparing data representative of at least one of said acquired images with data representative of images of the plurality of users in the repository, and identifying said candidate user as the given user if the comparison meets an identification criterion;

c) comparing data representative of at least one image that has met the identification criterion with data representative of images of the given user in the repository, and updating the data representative of images of the given user stored in the repository with data representative of at least one of the images that has met the identification criterion if the comparison met an enrollment criterion;

said updated repository constituting a repository for subsequent repetitions of stages (a)-(c).

14. A method for dynamically updating a repository that includes a plurality of images of users comprising:

providing a set that includes at least one camera operatively associated with a processor;

providing a repository of data representative of images of a plurality of users that includes a given user;

the method including, by the processor:

a) obtaining a plurality of images of a candidate user acquired by at least one camera of said set;

b) comparing data representative of at least one of said acquired images with data representative of images of the plurality of users in the repository, and identifying said candidate user as the given user if the comparison meets an identification criterion;

c) comparing data representative of at least one image that has met the identification criterion with data representative of images of the given user in the repository, and updating the data representative of images of the given user stored in the repository with data representative of at least one of the images that has met the identification criterion if the comparison met an enrollment criterion;

said updated repository constituting a repository for subsequent repetitions of stages (a)-(c);

wherein said enrollment criterion includes a simulation criterion, and further comprising:

for at least one of said acquired images that has met the identification criterion:

d) comparing data representative of the acquired image with data representative of images of the given user in the repository for determining data representative of the True Accepts (TA) of the acquired image from among the images of the given user in the repository; and

e) comparing data representative of the acquired image with data representative of images of other users in the repository for determining data representative of the False Accepts (FA) of the acquired image from among images of the other users in the repository,

f) and determining whether said simulation criterion is met based on the data representative of True Accepts and data representative of False Accepts.

15. A machine-readable memory tangibly embodying a program of instructions executable by a processor for executing the method of Claim 13.

16. A machine-readable memory tangibly embodying a program of instructions executable by a processor for executing the method of Claim 14.

Fig. 1

Fig. 2

Fig. 3

Fig. 4

Fig. 5

EP 3 385 883 A2

Fig. 6

EP 3 385 883 A2

Fig. 7A

Fig. 7B

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Biometrics: Theory, Applications, and Systems,* 2009